(19) Europäisches Patentamt
European Patent Office
Office européen des brevets

(11) EP 1 808 313 B1

(12) **EUROPEAN PATENT SPECIFICATION**

(45) Date of publication and mention of the grant of the patent:
**27.07.2011 Bulletin 2011/30**

(51) Int Cl.:
***B60C 9/02*** *(2006.01)*

(21) Application number: **06256587.4**

(22) Date of filing: **27.12.2006**

(54) **Pneumatic radial tire for airplane**

Pneumatischer Radialflugzeugreifen

Pneumatique radial pour avion

(84) Designated Contracting States:
**FR GB**

(30) Priority: **17.01.2006 JP 2006008882**

(43) Date of publication of application:
**18.07.2007 Bulletin 2007/29**

(73) Proprietor: **Bridgestone Corporation**
**Tokyo 104-8340 (JP)**

(72) Inventors:
- **Yano, Takeshi,**
**c/o Bridgestone Coporation**
**Kodaira-shi**
**Tokyo 187-8531 (JP)**
- **Ishizaki, Susumu,**
**c/o Bridgestone Coporation**
**Kodaira-shi**
**Tokyo 187-8531 (JP)**

(74) Representative: **Whalley, Kevin**
**Marks & Clerk LLP**
**90 Long Acre**
**London WC2E 9RA (GB)**

(56) References cited:
**EP-A- 0 540 303**
**EP-A- 1 609 623**
**US-A1- 2002 017 351**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention relates to a pneumatic radial tire for an airplane, and more particularly to a pneumatic radial tire for an airplane reducing tire weight while improving resistance to pressure and durability of the tire.

The radial tire for an airplane is defined to satisfy a basic internal pressure as high as more than 10 atmospheric pressure as an official standard but also the reinforcing member for the tire is required to have a resistance to pressure corresponding to 4 times the basic internal pressure in order to satisfy the requirement of higher reliability. For this end, the resistance to pressure is satisfied by constituting a tire carcass with many laminated carcass plies each containing organic fiber cords. On the other hand, it is required by airplane makers to satisfy the demand of significantly reducing the tire weight, and hence the balance between the tire performances and the weight reduction is an important issue in the tire design. Also, since a load borne by the pneumatic radial tire for an airplane is large, the flexure of the tire at a use state is set to a very large level. That is, the deformation amount of the tire carcass during the running becomes large, so that it is necessary that materials and structure durable to the deformation of the carcass upon repeated running are adopted in the carcass.

In the conventional technique, cords of an aliphatic polyamide fiber such as nylon having excellent fatigue resistance and heat shrinkability are used as a cord constituting the carcass ply. Also, it is examined that cords of an aromatic polyamide fiber or aramid fiber having a high strength at breakage are applied to the carcass ply, whereby the number of the carcass plies is decreased to further reduce the tire weight while ensuring the durability required in the pneumatic radial tire for an airplane.

However, since the nylon fiber cord has relatively small strength at breakage, when such a nylon fiber cord is applied to the carcass ply, it is required to arrange many carcass plies for giving the resistance to pressure required in the pneumatic radial tire for an airplane, which obstructs the further weight reduction of the tire.

On the other hand, when aramid fiber cords are applied to the carcass ply, there are clearly caused the following problems.

The first problem is in the tire production. In general, the carcass plies are laminated on a cylindrical drum in the shaping of the radial tire and then deformed in a toroidal form, during which there is caused a periphery change between the inner ply and the outer ply among these carcass plies. As a result, a slack is produced in the carcass ply located outward in the axial direction of the tire at a state of a green tire before the heating in the vulcanization step. When the conventional nylon fiber cords are applied to the carcass ply, heat shrinkage is caused in the nylon fiber cords by the heating in the vulcanization to correct the slack in the carcass ply, and hence there are obtained the properties of the carcass ply causing no problem in the tire product. However, when the aramid fiber cords are applied to the carcass ply, since the heat shrinkability of the aramid fiber cord is very small, it is difficult to remove the slack of the carcass ply at the vulcanization step, and it is difficult to attain the desired durability of the carcass.

The second problem is the fatigue property of the cord in the carcass ply. Since the aramid fiber has relatively small fatigue resistance to stress in the compression direction, when the tire using the carcass ply made of the aramid fiber cords is subjected to a durable test, strain is repeatedly applied to the carcass during the rotation of the tire, whereby the aramid fibers in the cord are subjected to a compression stress in the longitudinal direction to fatigue the cord and hence cord breaking-up (CBU) of the carcass ply is caused so as not to satisfy the desired durability of the tire.

A tire having the features of the preamble of claim 1 is known from the document EP-A-0540303.

It is, therefore, an object of the invention to solve the aforementioned problems of the conventional techniques and to provide a pneumatic radial tire for an airplane capable of reducing the tire weight while improving the resistance to pressure and durability of the tire.

The inventors have examined the properties required in the tire design in detail for solving the above problems and found that the tire weight can be reduced by properly using a particular tire structure and a polyketone fiber cord as an organic fiber cord while improving the resistance to pressure and durability of the tire.

According to the invention, there is provided a pneumatic radial tire for an airplane comprising a pair of bead cores, a radial carcass comprised of at least two carcass plies toroidally extending between the pair of bead cores and containing organic fiber cords arranged at an angle of 70-90° with respect to an equatorial plane of the tire, in which the radial carcass is comprised of at least one turnup ply having a main body portion toroidally extending between the pair of bead cores and a turnup portion wound around the bead core from an inside toward an outside in a widthwise direction of the tire and at least one down ply enveloping the turnup ply inclusive of the turnup portion from the outside and having a terminal end at least located just beneath the bead core, characterized in that a radially total strength $T_{ply}$ (N) of the organic fiber cords constituting the main body portion of the turnup ply and the down ply at a position corresponding to a maximum width of the tire, a maximum tire width W (m) and a tire outer diameter D (m) satisfies the following equation (I):

$$T_{ply}/WD \geq 4.0x10^6 \;..... \;(I)$$

and the organic fiber cord constituting at least one ply of the at least two carcass plies is a polyketone fiber cord satisfying the following equations (II) and (III):

$$\sigma \geq -0.01E + 1.2 \ldots\ldots (II)$$

$$\sigma \geq 0.02 \ldots\ldots (III)$$

(wherein σ is a heat shrinkage stress at 177°C (cN/dtex) and E is an elastic modulus at 25°C under a load of 49 N (cN/dtex)).

In a preferable embodiment of the pneumatic radial tire for an airplane according to the invention, the polyketone fiber cord has a heat shrinkage stress σ (cN/dtext) at 177°C of not less than 0.4 but less than 1.5.

In another preferable embodiment of the pneumatic radial tire for an airplane according to the invention, the polyketone has substantially a repeated unit represented by the following formula (IV):

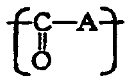
.... (IV)

(wherein A is a moiety derived from an unsaturated compound polymerized through unsaturated bonds, and may be same or different in repeated units).

In the pneumatic radial tire for an airplane according to the invention, A in the formula (IV) is ethylene group.

In the pneumatic radial tire for an airplane according to the invention, there is developed an advantageous effect that the tire weight can be reduced while improving the resistance to pressure and durability of the tire.

The invention will be described in detail with reference to the accompanying drawing, wherein:

FIG. 1 is a diagrammatic cross-section view of an embodiment of the pneumatic radial tire for an airplane according to the invention.

FIG. 1 is a diagrammatic cross-section view of an embodiment of the pneumatic radial tire for an airplane according to the invention. In FIG. 1, numeral 1 is a tread portion, numeral 2 a pair of sidewall portions continuously extending inward from side ends of the tread portion 1 in a radial direction, and numeral 3 a bead portion continuously arranged at an inner peripheral side of each of the sidewall portion 2.

Also, numeral 4 is a radial carcass comprised of at least two carcass plies toroidally extending between both the bead portions 3, two carcass plies in the illustrated embodiment and reinforcing the portions 1, 2 and 3, and numeral 5 a belt arranged on an outer periphery of a crown portion of the radial carcass 4 and comprised of plural layers, four belt layers in the illustrated embodiment. In the pneumatic radial tire according to the invention, a belt protection layer (not shown) may be arranged between the belt 5 and the tread portion 1. The detail structure of the portions other than the radial carcass 4 is the same as in the conventional pneumatic radial tire for an airplane.

The radial carcass 4 has a so-called up-down structure comprising at least one turnup ply 4a having a main body portion toroidally extending between bead cores 6 embedded in the respective bead portions 3 and a turnup portion wound around the bead core 6 from an inside toward an outside in the widthwise direction of the tire, two turnup plies 4a in the illustrated embodiment and at least one down ply 4b enveloping the turnup ply 4a inclusive of the turnup portion from the outside and having a terminal end at least located just beneath the bead core 6, one down ply in the illustrated embodiment. Such up-down structure can effectively prevent the pulling-out of the turnup ply from the bead core even at a state of applying a higher internal pressure to the tire, and hence the resistance to pressure required in the pneumatic radial tire can be ensured. Also, there is a fear that a large strain is caused at the end part of the turnup portion of the turnup ply located in the bead portion and in the vicinity thereof accompanied with the deformation of the bead portion during the running and hence separation failure is caused in the vicinity of the end part to bring about the breakage of the bead portion but the protection effect to the end part is obtained by the application of the down ply, and hence the separation failure at the end part can be prevented to largely improve the durability of the bead portion.

In the invention, the number of carcass plies is at least two plies, in which each of the turnup ply number and the down ply number is sufficient to be at least one ply, so that the carcass ply number, the turnup ply number and the down ply number are not particularly limited. However, the carcass ply number can be adjusted so as to ensure the

defined resistance to pressure in accordance with the tire size, and hence the number of the carcass plies can be reduced as compared with the case that conventional nylon cords are applied to the carcass ply.

In the illustrated tire, the carcass ply contains the organic fiber cords in which the organic fiber cord is oriented at an angle of 70-90° with respect to an equatorial plane of the tire. Further, in the pneumatic radial tire according to the invention, it is required that the radially total strength $T_{ply}$ (N) of the organic fiber cords constituting the main body portion of the turnup ply and the down ply at a position P corresponding to a maximum width of the tire, the maximum tire width W (m) and the tire outer diameter D (m) satisfies the equation (I) of $T_{ply}/WD \geq 4.0x10^6$.

At this moment, the radially total strength $T_{ply}$ (N) of the organic fiber cords constituting the main body portion of the turnup ply and the down ply at a position P corresponding to a maximum width of the tire is a value obtained by multiplying a radial strength t (N) of the cord constituting the main body portion of the turnup ply and the down ply by a total corresponding cord number. Moreover, the total corresponding cord number means the number of cords constituting the main body portion of the turnup ply and the down ply measured at the position P corresponding to the maximum width of the tire at such a state that the tire is assembled onto a rim and filled under a basic internal pressure defined in TRA standard. Also, the tire maximum width W and the tire outer diameter D are measured at such a state that the tire is assembled onto a rim and filled under a basic internal pressure defined in TRA standard.

In the pneumatic radial tire according to the invention, when the $T_{ply}$ (N), W (m) and D (m) satisfy the relation of the equation (I), it is possible to attain a high safety ratio required in the pneumatic radial tire for an airplane. When $T_{ply}/WD$ is less than $4.0x10^6$, it is difficult to attain the basic safety ratio and the official standard can not be satisfied.

The term "safety ratio" used herein means a ratio of a pressure breaking the tire when water is filled in the tire assembled onto the rim to raise the internal pressure to a basic internal pressure defined in TRA (tire breaking pressure/basic internal pressure defined in TRA). The higher the numerical value of the safety ratio, the better the resistance to pressure. In TSO defined by Federal Aviation Administration (FAA) is defined the safety ratio of not less than 4 times for the airplane tire. Moreover, $T_{ply}/WD$ is preferable to be $6.0x10^6$-$1.0x10^7$ from a viewpoint that a higher safety ratio is attained and the balance between the weight and the economical reason is obtained.

In the pneumatic radial tire for an airplane according to the invention, it is further required that the organic fiber cord constituting at least one ply of the carcass plies is a polyketone fiber cord satisfying the following equations (II) and (III):

$$\sigma \geq -0.01E + 1.2 \;..... \text{(II)}$$

$$\sigma \geq 0.02 \;..... \text{(III)}$$

(wherein σ is a heat shrinkage stress at 177°C (cN/dtex) and E is an elastic modulus at 25°C under a load of 49 N (cN/dtex)). At this moment, the heat shrinkage stress σ is a stress generated at 177°C in the organic fiber cord when a sample of the organic fiber cord of 25 cm in length subjected to a usual dipping treatment prior to the vulcanization is heated at a temperature rising rate of 5°C/min, while the elastic modulus E of the organic fiber cord at 25°C under a load of 49 N is an elastic modulus as a unit of cN/dtex calculated from a tangent line at 49 N in SS curve by a tensile test of cord according to JIS.

Since the polyketone fiber cord satisfying the equations (II) and (III) has a high strength at breakage, when such cords are applied to the carcass ply, the resistance to pressure required in the pneumatic radial tire for an airplane is satisfied but also it is possible to reduce the number of carcass plies as compared with the case that conventional nylon fiber cords are applied to the carcass ply, and hence a large reduction of the tire weight can be attained. At the same time, the polyketone fiber cord has such a reversibility that it is heat-shrunk with the rise of the temperature to develop large heat shrinkage stress and elastic force and stretched with the drop of the temperature and also has excellent heat shrinkability and fatigue resistance to stress in compression direction, so that the slack of the carcass ply generated in the tire production, which has been observed when aramid fiber cords are applied to the carcass ply, or the occurrence of carcass ply cutting due to cord fatigue during the running can be prevented and further the tire durability equal to or more than that of the tire using the conventional nylon fiber cords can be ensured.

Moreover, in order to more develop the effect of the invention, the heat shrinkage stress σ is preferable to be not less than 0.4. However, when the heat shrinkage stress σ exceeds 1.5, the shrinking force in the vulcanization becomes too large, and hence there is a fear that cord disorder in the interior of the tire or the disorder of rubber arrangement is caused to deteriorate the durability or the uniformity.

The polyketone fiber cord is obtained by twisting a plurality of filament bundles each made of polyketone. A raw material for the polyketone fiber cord is preferably a polyketone substantially having a repeated unit represented by the following formula (IV):

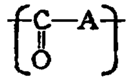

..... (IV)

(wherein A is a moiety derived from an unsaturated compound polymerized through unsaturated bonds, and may be same or different in repeated units). Among the polyketones, a polyketone in which not less than 97 mol% of the repeated unit is 1-oxotrimethylene ($-CH_2-CH_2-CO-$) is preferable, and a polyketone in which not less than 99 mol% is 1-oxotrimethylene is further preferable, and a polyketone in which 100 mol% is 1-oxotrimethylene is most preferable.

In a starting polyketone for the polyketone fiber cord, ketone groups may be partly bonded to each other or moieties derived from the unsaturated compound may be bonded to each other, but it is preferable that a ratio of alternate arrangement of the moiety derived from the unsaturated compound and the ketone group is not less than 90% by mass, more preferably not less than 97% by mass, most preferably 100% by mass.

The unsaturated compound forming A in the formula (IV) is most preferably ethylene. Also, there may be an unsaturated hydrocarbon other than ethylene such as propylene, butene, pentene, cyclopentene, hexene, cyclohexene, heptene, octene, nonene, decene, dodecene, styrene, acetylene, allene or the like; a compound containing an unsaturated bond such as methyl acrylate, methyl metacrylate, vinyl acetate, acrylamide, hydroxyethyl methacrylate, undecenic acid, undecenol, 6-chlorohexene, N-vinylpyrolidone, diethylester of sulnylphosphric acid, sodium styrenesulfonate, sodium allylsulfonate, vinylpyrolidone, vinyl chloride or the like; and so on.

As the polymerization degree of the polyketone, it is preferable that a limit viscosity (η) defined by the following equation (V):

$$[\eta] = \lim_{C \to 0} \frac{(T-t)}{(t \cdot C)} \quad \text{..... (V)}$$

(wherein t is a passing time of hexafluoroisopropanol having a purity of not less than 98% through a viscosity tube, and T is a passing time of a diluted solution of polyketone dissolved in hexafluoropropanol at 25°C through the viscosity tube, and C is a mass (g) of a solute in 100 mL of the diluted solution) is within a range of 1-20 dL/g, more preferably 2-10 dL/g, further preferably 3-8 dL/g. When the limit viscosity is less than 1 dL/g, the molecular weight is too small and it is difficult to obtain a high-strength polyketone fiber cord, but also problems such as napping, breaking and the like are frequently caused in the steps of spinning, drying and drawing. While, when the limit viscosity exceeds 20 dL/g, the synthesis of the polymer takes great time and cost, but also it is difficult to uniformly dissolve the polymer, which may badly affect the spinability and properties.

Methods of forming polyketone fiber are preferably (1) a method of subjecting an undrawn fiber to a multi-stage heat drawing in which a final drawing at the multi-stage heat drawing step is carried out at specified temperature and draft ratio and (2) a method of subjecting an undrawn fiber to heat drawing and then quenching under a high tension. By forming the polyketone fiber through the method (1) or (2) can be obtained desirable filaments suitable for the production of the polyketone fiber cord.

The method of spinning the polyketone undrawn fiber is not particularly limited, but may adopt the conventionally known methods. Concretely, there are mentioned a wet spinning method using an organic solvent as disclosed in JP-A-H02-112413, JP-A-H04-228613 and JP-A-H04-505344, and a wet spinning method using an aqueous solution of zinc salt, calcium salt, thiocyanate, iron salt or the like as disclosed in WO99/18143, WO00/09611, JP-A-2001-164422, JP-A-2004-218189 and JP-A-2004-285221. Among them, the wet spinning method using the aqueous solution of the salt is preferable.

In the wet spinning method using the organic solvent, a polyketone polymer is dissolved in hexafluoroisopropanol, m-cresol or the like at a concentration of 0.25-20% by mass and extruded through a spinning nozzle to form a fiber and then the solvent is removed in a non-solvent bath of toluene, ethanol, isopropanol, n-hexane, isooctane, acetone, methyl ethyl ketone or the like, whereby the polyketone undrawn fiber can be obtained after the washing.

In the wet spinning method using the aqueous solution, the polyketone polymer is dissolved in an aqueous solution of zinc salt, calcium salt, thiocyanate, iron salt or the like at a concentration of 2-30% by mass and extruded from a spinning nozzle into a coagulation bath at 50-130°C to conduct gel spinning and then desalted and dried to obtain the polyketone undrawn fiber. In the aqueous solution dissolving the polyketone polymer, it is preferable to use a mixture of a zinc halide and a halide of an alkali metal or an alkaline earth metal. In the coagulation bath can be used water, an aqueous solution of a metal salt, or an organic solvent such as acetone, methanol or the like.

The method of drawing the undrawn fiber is preferably a heat drawing method wherein the undrawn fiber is drawn by heating to a temperature higher than the glass transition temperature of the undrawn fiber. Moreover, the drawing of the undrawn fiber in the above method (2) may be carried out at one stage, but it is preferable to conduct multi-stage drawing. The heat drawing method is not particularly limited, and may adopt a method of running the fiber on, for example, a heating roll or a heating plate, and so on. At this moment, the heat drawing temperature is preferably within a range of 110°C to a melting point of polyketone, and the total drawing ratio is preferably not less than 10 times.

When the formation of the polyketone fiber is carried out by the method (1), the temperature at the final drawing step of the multi-stage drawing is preferable to be within a range of 110°C to (drawing temperature at drawing step back to the final drawing step - 3°C), while the drawing ratio at the final drawing step is preferable to be within a range of 1.01-1.5 times. When the formation of the polyketone fiber is carried out by the method (2), the tension applied to the fiber after the heat drawing is preferable to be within a range of 0.5-4 cN/dtex. Also, the cooling rate in the quenching is preferable to be not less than 30°C/second, and the cooling-end temperature in the quenching is preferable to be not higher than 50°C. The quenching method of the heat-drawn polyketone fiber is not particularly limited, and may adopt the conventionally known methods. Concretely, a cooling method using a roll is preferable. Moreover, the thus obtained polyketone fiber is large in the retention of elastic strain, so that it is preferable that the fiber is usually subjected to a relaxation heat treatment so as to make the fiber length shorter than the fiber length after the heat drawing. At this moment, the temperature of the relaxation heat treatment is preferable to be within a range of 50-100°C and the relaxation ratio is preferable to be within a range of 0.980-0.999.

The polyketone fiber cord is obtained by twisting a plurality of filament bundles each made of polyketone, preferably 2 or 3 bundles. For example, it can be obtained as a twisted cord of double twisted structure by ply-twisting the filament bundle of polyketone and then cable-twisting a plurality of ply-twisted bundles.

In the pneumatic radial tire for an airplane according to the invention, the organic fiber cord constituting at least one ply among at least two carcass plies constituting the radial carcass 4 is the aforementioned polyketone fiber cord, but the number of carcass plies having the above polyketone fiber cord among all of the carcass plies is not particularly limited. In order to increase the utilization efficiency of the cord strength, the elastic modulus of the cord constituting all carcass plies is made equal, i.e. all carcass plies may be constituted with the polyketone fiber cords. Alternatively, the turnup ply may be constituted with the polyketone fiber cord and the down ply may be constituted with nylon cord.

In the production of the pneumatic radial tire for an airplane, it is preferable that a green tire is shaped on a rigid core of split type having an outer profile form corresponding to an inner profile form of a product tire and thereafter the green tire is inserted together with the rigid core into a mold and then vulcanized. According to this method, a product tire can be obtained without adding deformation to the tire or constitutional members thereof from the start of shaping the green tire to the completion of the vulcanization, so that the dimensional accuracy of each tire part can be largely improved. As a gas filled in the pneumatic radial tire can be used usual air or air having a changed partial oxygen pressure or an inert gas such as nitrogen or the like.

The following examples are given in illustration of the invention and are not intended as limitations thereof.

There are prepared pneumatic radial tires for airplanes of Examples 1-2, Comparative Examples 1-3 and Conventional Examples 1-2 having a structure shown in FIG. 1 and a tire size of 46x17R20 30 PR except for a carcass structure of Table 1 that nylon fiber cords, aramid fiber cords and polyketone fiber cords are applied to a carcass ply as shown in Table 1. The property of the carcass ply in each of these tires is evaluated by an anatomical examination in which no slack of cords in the carcass ply is acceptable and the occurrence of slack is unacceptable. Also, the weight of each tire is represented by an index on the basis that the tire weight of Conventional Example 1 is 100 in which the smaller the numerical value, the lighter the tire. Further, the safety ratio and bead portion durability of each tire are evaluated by the following methods. These results are shown in Table 1.

(1) Safety ratio

The safety ratio (times) is a ratio of a pressure breaking the tire when water is filled in the tire assembled into the rim to raise the internal pressure with respect to the basic internal pressure defined in TRA. The larger the numerical value, the better the resistance to pressure in the tire. Moreover, in TSO defined in FAA, the safety ratio of the airplane tire is regulated to be not less than 4 times.

(2) Bead portion durability

Each of the tires is mounted onto a rim having a rim size of 46x16 and placed on a drum testing machine and then repeatedly subjected to a taxi test (run at a speed of 64 km/h for 10 minutes and then cooled at a state of stopping the tire for 110 minutes) under conditions of internal pressure: 1530 kPa and load: 20870 kg. The test number is measured as an indication of the bead portion durability, and represented by an index on the basis that the value of Conventional Example 1 is 100, in which the larger the numerical value, the better the bead portion durability.

Table 1

| | | Conventional Example 1 | Conventional Example 2 | Comparative Example 1 | Comparative Example 2 | Comparative Example 3 | Example 1 | Example 2 |
|---|---|---|---|---|---|---|---|---|
| Outer diameter of tire D (m) | | 1.17 | 1.17 | 1.17 | 1.17 | 1.17 | 1.17 | 1.17 |
| Width of tire (m) | | 0.43 | 0.43 | 0.43 | 0.43 | 0.43 | 0.43 | 0.43 |
| Carcass ply cord | Material | nylon | aramid | polyketone*1 | polyketone*1 | polyketone*2 | polyketone*1 | polyketone*1 (turnup ply), nylon (down ply) |
| | Structure (dtex/ cords) | 1400/2//2 | 1670/2//2 | 1670/2//2 | 1670/2//2 | 1670/2//2 | 1670/2//2 | 1670/2//2 (polyketone), 1400/2//2 (nylon) |
| | Ply twist x cable twist (turns/10 cm) | 26x26 | 47x47 | 47x47 | 47x47 | 47x47 | 47x47 | 47x47 (polyketone) 26x26 (nylon) |
| | σ(cN/dtex) | 0.2 | 0 | 0.5 | 0.5 | 0.3 | 0.5 | 0.5 (polyketone), 0.2 (nylon) |
| | E (cN/dtex) | 40 | 160 | 155 | 155 | 40 | 155 | 155 (polyketone), 40 (nylon) |
| Carcass structure | Total number | 5 | 3 | 3 | 2 | 3 | 3 | 3 |
| | (turnup ply number) | 4 | 2 | 3 | 1 | 2 | 2 | 2 (polyketone) |
| | (down ply number) | 1 | 1 | - | 1 | 1 | 1 | 1 (nylon) |
| | Cord strength t (N) | 525 | 962 | 918 | 918 | 826 | 918 | 918 (polyketone), 525 (nylon) |
| | Number of cords at position of maximum tire width (cords)*3 | 5585 | 3007 | 3007 | 2005 | 3007 | 3007 | 2005 (polyketone) +2002 (nylon) |
| | $T_{ply}$ (N) | $2.93x10^6$ | $2.89x10^6$ | $2.76x10^6$ | $1.84x10^6$ | $2.48x10^6$ | $2.76x10^6$ | $2.37x10^6$ |
| | Tply/WD | $5.83x10^6$ | $5.75x10^6$ | $5.49x10^6$ | $3.66x10^6$ | $4.94x10^6$ | $5.49x10^6$ | $4.70x10^6$ |

(continued)

| | | Conventional Example 1 | Conventional Example 2 | Comparative Example 1 | Comparative Example 2 | Comparative Example 3 | Example 1 | Example 2 |
|---|---|---|---|---|---|---|---|---|
| Tire performances | Property of ply | acceptable | unacceptable | acceptable | acceptable | acceptable | acceptable | acceptable |
| | Tire weight (index) | 100 | 93 | 93 | 90 | 93 | 93 | 93 |
| | Safety ratio (times) | 4.5 | 4.2 | 3.2 | 3.5 | 4.2 | 4.7 | 4.5 |
| | Bead portion durability (index) | 100 | 30 | 71 | 101 | 99 | 105 | 107 |

*1 Polyketone in which approximately 100% consists of the repeat unit of formula (IV) and not less than 97 mol% of the repeat unit is 1-oxotrimethylene
*2 Polyketone consisting of the repeat unit of the formula (IV) in which A is mainly ethylene group (containing about 6% of propylene)
*3 Number of cords constituting main body portion of turnup ply and down ply

As seen from Table 1, in the tires of Examples 1 and 2 using the polyketone fiber cords satisfying the equations (II) and (III), the safety ratio is not less than the defined safety ratio (4 times) even when the number of carcass plies is smaller than that of the tire of Conventional Example 1 using the nylon fiber cord. From this fact, it is clear that Examples 1 and 2 satisfy the resistance to pressure required in the airplane tire and the tire weight is reduced as compared with Comparative Example 1. In Examples 1 and 2, the safety ratio and bead portion durability are improved as compared with Conventional Example 1. On the other hand, in the tire of Conventional Example 2, the slack of the carcass ply is observed and the bead portion durability is considerably deteriorated as compared with Conventional Example 1 and Examples 1 and 2.

In Comparative Example 1 having no down ply and Comparative Example 2 having a radial carcass structure not satisfying the equation (I), the safety ratio is less than the defined safety ratio (4 times). Particularly, the bead portion durability in Comparative Example 1 is deteriorated as compared with Conventional Example 1 and Examples 1 and 2. In Comparative Example 3 using the polyketone fiber cord not satisfying the equations (II) and (III), the safety ratio and bead portion durability are not improved as compared with Examples 1 and 2.

## Claims

1. A pneumatic radial tire for an airplane comprising a pair of bead cores (6), a radial carcass (4) comprising at least two carcass plies toroidally extending between the pair of bead cores and containing organic fiber cords arranged at an angle of 70-90° with respect to an equatorial plane of the tire, in which the radial carcass comprises at least one turnup ply (4a) having a main body portion toroidally extending between the pair of bead cores and a turnup portion wound around the bead core from an inside toward an outside in a widthwise direction of the tire and at least one down ply (4b) enveloping the turnup ply inclusive of the turnup portion from the outside and having a terminal end at least located just beneath the bead core, **characterized in that** a radially total strength $T_{ply}$ (N) of the organic fiber cords constituting the main body portion of the turnup ply (4a) and the down ply (4b) at a position (P) corresponding to a maximum width of the tire, a maximum tire width W (m) and a tire outer diameter D (m) satisfies the following equation (I):

$$T_{ply}/WD \geq 4.0 \times 10^6 \quad \text{(I)}$$

and the organic fiber cord constituting at least one ply of the at least two carcass plies is a polyketone fiber cord satisfying the following equations (II) and (III):

$$\sigma \geq -0.01E + 1.2 \quad \text{(II)}$$

$$\sigma \geq 0.02 \quad \text{(III)}$$

wherein $\sigma$ is a heat shrinkage stress at 177°C (cN/dtex) and E is an elastic modulus at 25°C under a load of 49 N (cN/dtex).

2. A pneumatic radial tire for an airplane according to claim 1, wherein the polyketone fiber cord has a heat shrinkage stress $\sigma$ (cN/dtext) at 177°C of not less than 0.4 but less than 1.5.

3. A pneumatic radial tire for an airplane according to claim 1, wherein the polyketone has substantially a repeated unit represented by the following formula (IV):

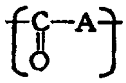

..... (IV)

wherein A is a moiety derived from an unsaturated compound polymerized through unsaturated bonds, and may be same or different in repeated units.

**4.** A pneumatic radial tire for an airplane according to claim 3, wherein A in the formula (IV) is ethylene group.

**Patentansprüche**

**1.** Radial-Luftreifen für ein Flugzeug, der ein Paar von Wulstkernen (6), eine radiale Karkasse (4), die wenigstens zwei Karkassenlagen umfasst, die sich kreisringförmig zwischen dem Paar von Wulstkernen erstrecken und organische Faserkords enthalten, die in einem Winkel von 70 bis 90° in Bezug auf eine Äquatorialebene des Reifens angeordnet sind, umfasst, wobei die radiale Karkasse wenigstens eine Umschlaglage (4a), die einen Hauptkorpusabschnitt, der sich kreisringförmig zwischen dem Paar von Wulstkernen erstreckt und einen Umschlagabschnitt, der von einer Innenseite aus zu einer Außenseite hin in einer Breitenrichtung des Reifens um den Wulstkern gewickelt ist, hat, und wenigstens eine Abwärtslage (4b), welche die Umschlaglage einschließlich des Umschlagabschnitts von der Außenseite her einhüllt und ein Abschlussende hat, das wenigstens gerade unterhalb des Wulstkerns angeordnet ist, umfasst, **dadurch gekennzeichnet, dass** eine radiale Gesamtfestigkeit $T_{ply}$ (N) der organischen Faserkords, die den Hauptkorpusabschnitt der Umschlaglage (4a) und der Abwärtslage (4b) ausmachen, an einer Position (P), die einer maximalen Breite des Reifens entspricht, eine maximale Reifenbreite W (m) und ein Reifenaußendurchmesser D (m) die folgende Gleichung (I) erfüllen:

$$T_{ply} / WD \geq 4{,}0 \times 10^{6} \qquad \text{(I)}$$

und der organische Faserkord, der wenigstens eine Lage der wenigstens zwei Karkassenlagen ausmacht, ein Polyketon-Faserkord ist, der die folgenden Gleichungen (II) und (III) erfüllt:

$$\sigma \geq -0{,}01E + 1{,}2 \qquad \text{(II)}$$

$$\sigma \geq 0{,}02 \qquad \text{(III)}$$

wobei σ eine Wärmeschrumpfungsspannung bei 177°C (cN/dtex) ist und E ein Elastizitätsmodul bei 25°C unter eine Belastung von 49 N (cN/dtex) ist.

**2.** Radial-Luftreifen für ein Flugzeug nach Anspruch 1, wobei der Polyketon-Faserkord eine Wärmeschrumpfungsspannung σ (cN/dtex) bei 177°C von nicht weniger als 0,4, aber weniger als 1,5 hat.

**3.** Radial-Luftreifen für ein Flugzeug nach Anspruch 1, wobei das Polyketon im Wesentlichen eine wiederholte Einheit hat, die durch die folgende Formel (IV) dargestellt wird:

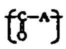

(IV)

wobei A ein von einer ungesättigten Verbindung abgeleiteter Anteil, polymerisiert durch ungesättigte Bindungen, ist und in wiederholten Einheiten gleich oder unterschiedlich sein kann.

**4.** Radial-Luftreifen für ein Flugzeug nach Anspruch 3, wobei A in der Formel (IV) eine Ethylengruppe ist.

**Revendications**

**1.** Bandage pneumatique radial pour un avion, comprenant une paire de tringles (6), une carcasse radiale (4) comprenant au moins deux nappes de carcasse, s'étendant toroïdalement entre la paire de tringles et contenant des câblés de fibres organiques agencés à un angle compris entre 70 et 90° par rapport à un plan équatorial du bandage pneumatique, la carcasse radiale comprenant au moins une nappe retournée (4a), comportant une partie de corps principale s'étendant toroïdalement entre la paire de tringles, et une partie retournée enroulée autour de la tringle, de l'intérieur vers l'extérieur dans une direction de la largeur du bandage pneumatique, et au moins une nappe retournée vers le bas (4b), enveloppant la nappe retournée à l'inclusion de la partie retournée à partir de l'extérieur, et comportant une extrémité terminale agencée au moins juste au-dessous de la tringle, **caractérisé en ce qu'**une résistance totale dans la direction radiale $T_{ply}$ (N) des câblés de fibres organiques constituant la partie de corps principale de la nappe retournée (4a) et de la nappe retournée vers le bas (4b) au niveau d'une position (P) correspondant à une largeur maximale du bandage pneumatique, une largeur maximale du bandage pneumatique W (m) et un diamètre extérieur du bandage pneumatique D (m) satisfont l'équation ci-dessous (I) :

$$T_{ply}/WD \geq 4{,}0x10^6 \qquad (I)$$

le câblé de fibres organiques constituant au moins une nappe des au moins deux nappes de carcasse étant un câblé de fibres de polycétone, satisfaisant les équations (II) et (III) ci-dessous :

$$\sigma \geq -0{,}01E + 1{,}2 \qquad (II)$$

$$\sigma \geq 0{,}02 \qquad (III)$$

où σ représente une contrainte de retrait thermique à 177°C (cN/dtex) et E représentant un module d'élasticité à 25°C en présence d'une charge de 49 N (cN/dtex).

**2.** Bandage pneumatique radial pour un avion selon la revendication 1, dans lequel le câblé de fibres de polycétone présente une contrainte de retrait thermique σ (cN/dtex) à 177°C non inférieure à 0,4 mais inférieure à 1,5.

**3.** Bandage pneumatique radial pour un avion selon la revendication 1, dans lequel la polycétone comporte pour l'essentiel une unité répétitive représentée par la formule ci-dessous (IV) :

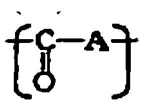

(IV)

où A représente un fragment dérivé d'un composé non saturé polymérisé par des liaisons non saturées, et pouvant être identique ou différent dans les unités répétitives.

**4.** Bandage pneumatique radial pour un avion selon la revendication 3, dans lequel A dans la formule (IV) représente un groupe éthylène.

FIG. 1

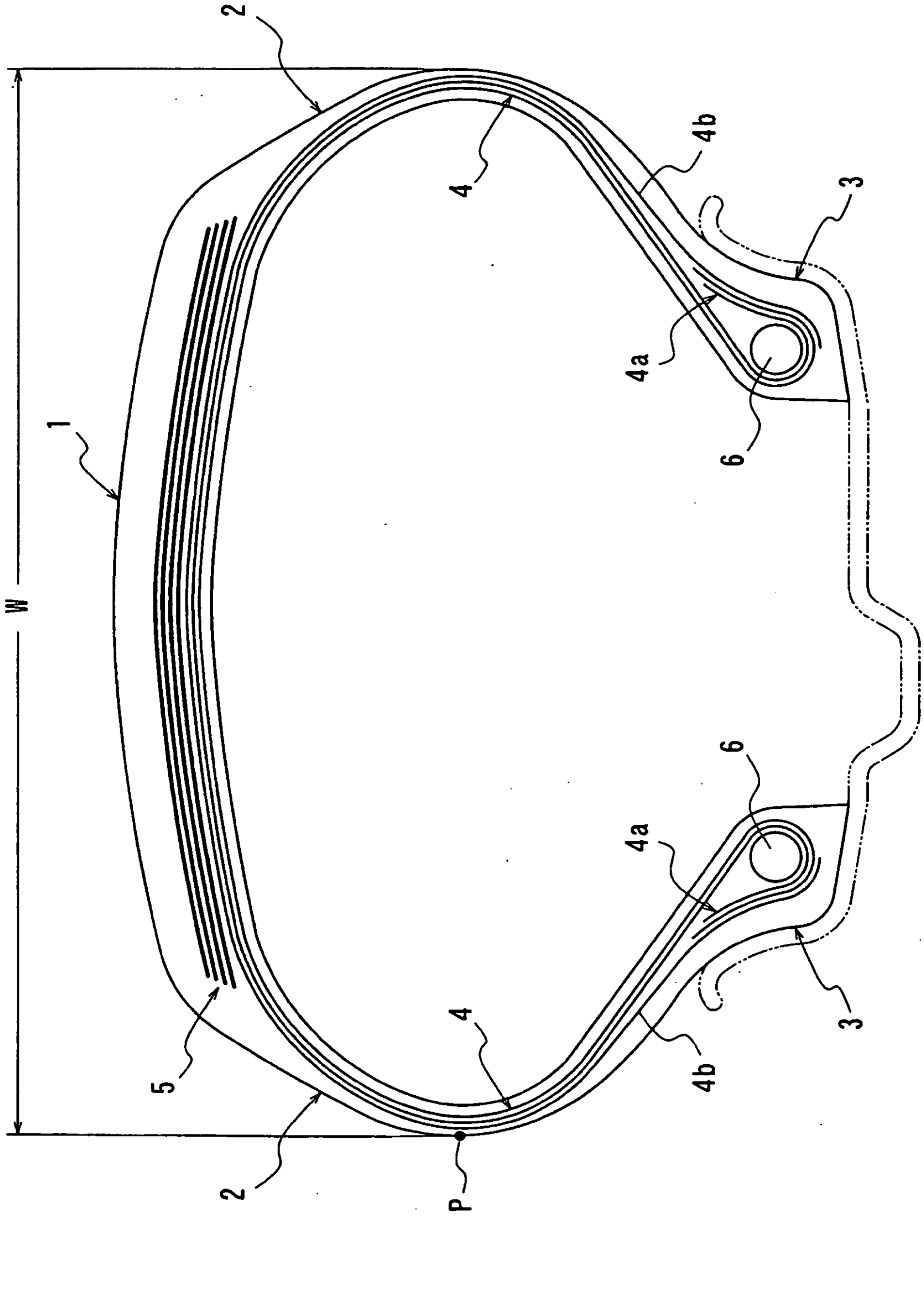

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0540303 A
- JP H02112413 A
- JP H04228613 A
- JP H04505344 A
- WO 9918143 A
- WO 0009611 A
- JP 2001164422 A
- JP 2004218189 A
- JP 2004285221 A